# EUROPÄISCHE PATENTSCHRIFT

(11) **EP 0 325 729 B1**
(45) Veröffentlichungstag und Bekanntmachung des Hinweises auf die Patenterteilung: **12.05.1993**
(21) Anmeldenummer: 88119840.2
(22) Anmeldetag: 29.11.1988
(51) Int. Cl.: F16K 1/22

(54) **Klappengestänge für Drehklappen**
Tringle system for pivotable flaps
Tringlerie pour volets pivotants

(30) Priorität: 30.11.1987 DE 8715838 U
(43) Veröffentlichungstag der Anmeldung: 02.08.1989
(73) Patentinhaber: Stober + Morlock Wärmekraft Gesellschaft mbH, D-45657 Recklinghausen (DE)
(72) Erfinder: von Erichsen, Volker, D-4350 Recklinghausen (DE)
(74) Vertreter: Andrejewski, Walter

(56) Entgegenhaltungen:
- EP-A- 0 049 302
- DE-A- 3 313 662
- DE-C- 2 244 972
- US-A- 4 610 197

## Beschreibung

Die Erfindung betrifft ein Klappengestänge für mehrere parallelachsig an einem Klappenrahmen gelagerte Drehklappen, deren Drehklappenwellen an ihren Enden drehfest verbundene Naben und an die Nahen angeschlossene gerade doppelarmige Gelenkhebel aufweisen, an denen starre Schubstangen eines Stelltriebes angreifen, wobei die Gelenkhebel um Schwenkachsen gelenkig an ihren Naben derart gelagert sind, daß die Schwenkachsen parallel zu einer die Drehachsen der Schubstangen an den Gelenkhebeln schneidenden Linie verlaufen und die jeweilige Drehklappenwelle um die Schwenkachse gegen die Ebene des Gelenkhebels verschwenkbar ist.

Es ist ein derartiges Klappengestänge bekannt, bei welchem die Drehklappenwellen selbst bei temperaturbedingten Längenänderungen des Klappenrahmens bzw. des Abstandes der Drehklappenwellen von Biegemomenten freigehalten werden. Jedoch können bei Anordnung einer Mehrzahl von Drehklappen geringfügige Undichtigkeiten auftreten, obwohl mit dem bekannten Klappengestänge sämtliche Drehklappen gleichmäßig verstellt werden. Diese Undichtigkeiten können insbes. dann auftreten, wenn sich im Bereich der Klappensitze Staubablagerungen befinden (vgl. DE-A 22 44 972).

Der Erfindung liegt die Aufgabe zugrunde, ein Klappengestänge der eingangs beschriebenen Art zu schaffen, welches ein vollständiges Schließen sämtlicher Drehklappen gewährleistet.

Diese Aufgabe löst die Erfindung bei einem gattungsgemäßen Klappengestange dadurch, daß sich die Naben über Federn gegen auf den Enden der Drehklappenwellen gelagerte Zwischenhebel abstützen. - Diese Maßnahmen der Erfindung haben zur Folge, daß sämtliche Drehklappen vollständig schließen. Der Anpreßdruck zwischen den Drehklappen und den Klappensitzen bzw. -dichtungen liegt innerhalb eines vorbestimmten Bereiches, auch dann, wenn die Positionen der Klappensitze bzw. -dichtungen einzelner Drehklappen von denen anderer Drehklappen geringfügig abweichen.

Bei einer bevorzugten Ausführungsform des Klappengestänges nach der Erfindung sind den Drehklappenwellen je zwei Federn symmetrisch zugeordnet. Hierdurch werden ungleichmäßige Krafteinleitungen in die Gelenkhebel und die Schubstangen vermieden und von den Drehklappenwellen unerwünschte Biegemomente ferngehalten. Weiterhin ist es zweckmäßig, daß die Achsen der Federn senkrecht zu den Längsachsen der Gelenkhebel verlaufen. Hierdurch ergibt sich eine biegemomentfreie Belastung der Federn, so daß die Federkennlinien von solchen Momenten unbeeinflußt bleiben.

Wenn nach bevorzugter Ausführungsform die Federn als Tellerfederpakete ausgebildet sind, wird ein ungleichmäßiger Verschleiß der Tellerfedern vermieden.

Im folgenden ist die Erfindung anhand einer lediglich ein Ausführungsbeispiel darstellenden Zeichnung näher erläutert; es zeigen:

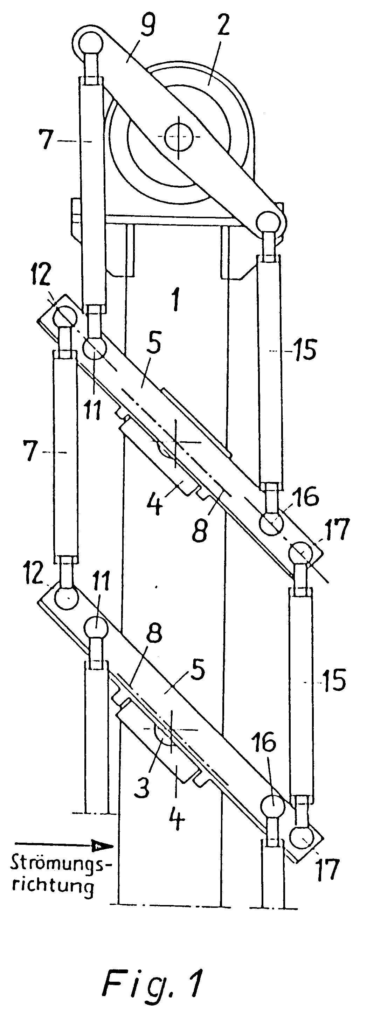

- Fig. 1: die Antriebsseite einer Drehklappe mit Klappengestänge in schematischer Darstellung,

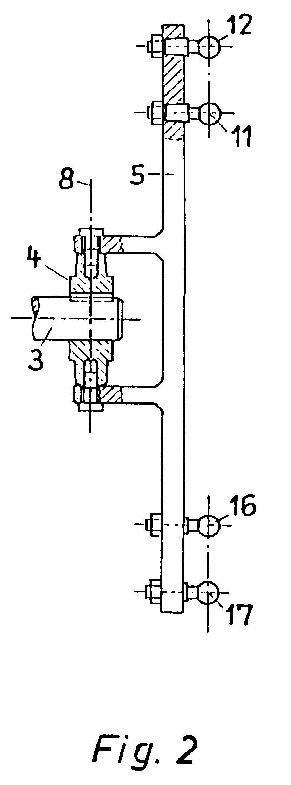

- Fig. 2: einen Gelenkhebel für den Gegenstand nach Fig. 1 in Seitenansicht und teilweise geschnitten,

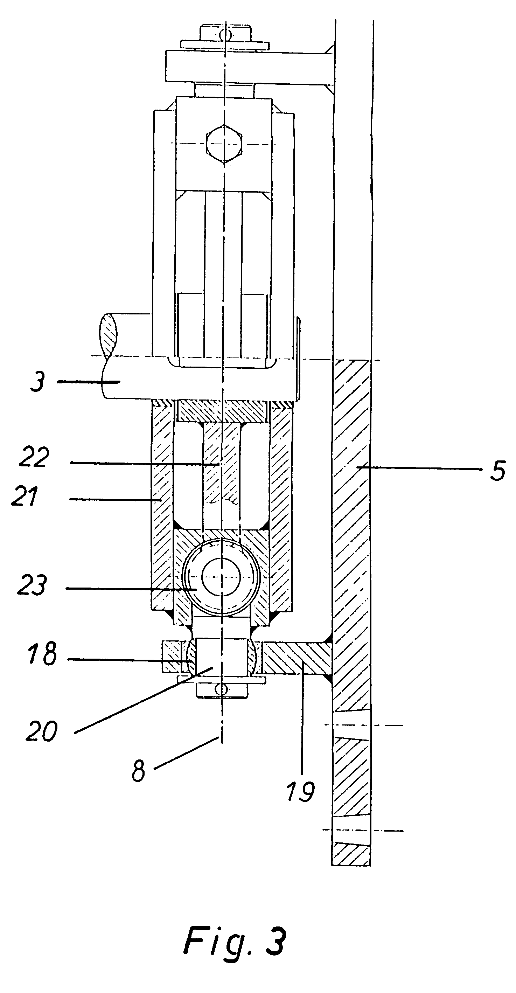

- Fig. 3: einen vergrößerten Ausschnitt aus dem Gegenstand nach Fig. 2, teilweise in Aufsicht und geschnitten und

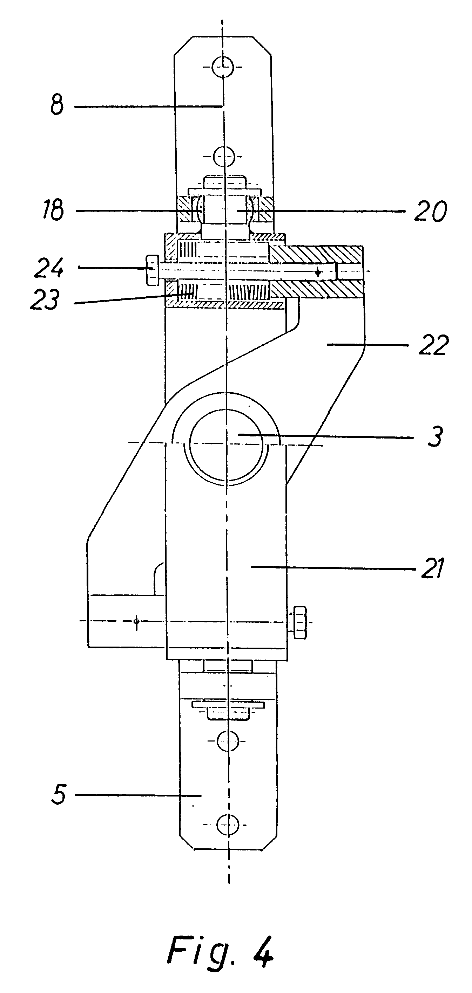

- Fig.4: den Gegenstand nach Fig. 3, teilweise in Aufsicht und geschnitten in Längsrichtung der Drehklappenwellen.

In den Figuren ist ein Klappengestänge für mehrere parallelachsig an einem Klappenrahmen eingelagerte Drehklappen dargestellt. Derartige Drehklappen werden insbes. in Kanälen großen Querschnitts, beispielsweise in Rauchgaskanälen von Kraftwerken verwendet. Das Klappengestänge weist ein Getriebe 2 und am Klappenrahmen 1 gelagerte Drehklappenwellen 3 auf. Mit den Enden der Drehklappenwellen 3 sind Gelenkhebel 5 auf eine weiter unten beschriebene Weise verbunden. Die Gelenkhebel 5 sind untereinander über Schubstangen 7, 15 gelenkig miteinander verbunden. Die jeweils äußeren bzw. oberen Schubstangen 7, 15 sind an einem zum Getriebe 2 gehörenden Antriebshebel 9 gelenkig angeschlossen. Die Schubstangen 7, 15 sind starre Schubstangen, wobei die Anordnung im einzelnen so getroffen ist, daß die Schwenkachsen 8 der Gelenkhebel 5 parallel zu einer Linie verlaufen, welche die Drehachsen 11, 12, 16, 17 der Schubstangen 7, 15 an den Gelenkhebeln 5 schneidet. Die Verbindung der Drehklappenwellen 3 mit den Gelenkhebeln 5 erfolgt in der Weise, daß die Gelenkwelle 3 um eine Schwenkachse 8 gegen die Ebene des Gelenkhebels 5 verschwenkbar ist. Die hierzu dienenden Lager 18 sind in Stützen 19 angeordnet, welche auf den Gelenkhebeln 5 befestigt sind. In den Lagern 18 sind Zapfen 20 geführt, mit denen Zwischenhebel 21 verbunden sind, die auf den Drehklappenwellen 3 gelagert aber nicht drehfest mit ihnen verbunden sind. Drehfest verbunden mit den Drehklappenwellen 3 sind Naben 4, 22, die sich über Federn 23 gegen die Zwischenhebel 21 abstützen. Bei diesen Federn 23 handelt es sich um Tellerfederpakete, deren Vorspannung durch Schrauben 24 eingestellt werden kann.

## Patentansprüche

1. Klappengestänge für mehrere parallelachsig an einem Klappenrahmen (1) gelagerte Drehklappen, deren Drehklappenwellen (3) an ihren Enden drehfest verbundene Naben (4, 22) und an die Naben angeschlossene gerade doppelarmige Gelenkhebel (5) aufweisen, an denen starre Schubstangen (7, 15) eines Stelltriebes angreifen, wobei die Gelenkhebel (5) um Schwenkachsen (8) gelenkig an ihren Naben (4, 22) derart gelagert sind, daß die Schwenkachsen (8) parallel zu einer die Drehachsen (11, 12, 16, 17) der Schubstangen (7, 15) an den Gelenkhebeln (5) schneidenden Linie verlaufen und die jeweilige Drehklappenwelle (3) um die Schwenkachse (8) gegen die Ebene des Gelenkhebels (5) verschwenkbar ist, **dadurch gekennzeichnet,** daß sich die Naben (4, 22) über Federn (23) gegen auf den Enden der Drehklappenwellen (3) gelagerte Zwischenhebel (21) abstützen.

2. Klappengestänge nach Anspruch 1, **dadurch gekennzeichnet,** daß den Drehklappenwellen (3) je zwei Federn (23) symmetrisch zugeordnet sind.

3. Klappengestänge nach Anspruch 1 oder 2, **dadurch gekennzeichnet**, daß die Achsen der Federn (23) senkrecht zu den Längsachsen der Gelenkhebel (5) verlaufen.

4. Klappengestänge nach einem der Ansprüche 1 bis 3, **dadurch gekennzeichnet,** daß die Federn (23) als Tellerfederpakete ausgebildet sind.

## Claims

1. A valve rod assembly for a plurality of butterfly valves mounted axially parallel on a valve frame (1), the butterfly valve shafts (3) of which have hubs (4, 22) attached rotationally fixed to their ends and have straight double-armed articulated levers (5) attached to the hubs, with which levers rigid connecting rods (7, 15) of an adjustment drive engage, wherein the articulated levers (5) are mounted on their hubs (4, 22) articulated about swivelling axes (8) in such a way that the swivelling axes (8) run parallel to a line passing through the axes of rotation (11, 12, 16, 17) of the connecting rods (7, 15) on the articulated levers (5) and each butterfly valve shaft (3) can swing about the swivelling axis (8) towards the plane of the articulated lever (5), characterised in that the hubs (4, 22) are supported via springs (23) against intermediate levers (21) mounted on the ends of the butterfly valve shafts (3).

2. A valve rod assembly according to claim 1, characterised in that two springs (23) are symmetrically assigned to each of the butterfly valve shafts (3).

3. A valve rod assembly according to claims 1 or 2, characterised in that the axes of the springs (23) run perpendicularly to the longitudinal axes of the articulated levers (5).

4. A valve rod assembly according to any one of claims 1 to 3, characterised in that the springs (23) are constructed as disc spring stacks.

## Revendications

1. Tringlerie de volets pour une pluralité de volets pivotants à axes parallèles supportés par un châssis (1), dont les arbres (3) de volets pivotants présentent à leurs extrémités des moyeux (4,22) fixes en rotation et des leviers articulés (5) à deux bras directement reliés aux moyeux, sur lesquels agissent des tringles de poussée rigides (7,15) d'un mécanisme de réglage, les leviers articulés (5) étant articulés en leurs moyeux (4,22) autour d'axes de pivotement (8), de telle sorte que les axes de pivotement (8) s'étendent parallèlement à une droite coupant les axes de rotation (11, 12,16,17) des tiges de poussée (7,15) sur les leviers articulés (5) et l'arbre (3) de chaque volet pivotant peut pivoter autour de l'axe de pivotement (8) par rapport au plan du levier articulé (5), caractérisée en ce que les moyeux (4,22) s'appuient par l'intermédiaire de ressorts (23) contre des leviers intermédiaires (21) disposés aux extrémités des arbres (3) des volets pivotants.

2. Tringlerie de volets selon la revendication 1, caractérisée en ce qu'à chaque arbre (3) de volet pivotant sont associés symétriquement deux ressorts (23).

3. Tringlerie de volets selon la revendication 1 ou 2, caractérisée en ce que les axes des ressorts (23) s'étendent perpendiculairement aux axes longitudinaux des leviers articulés (5).

4. Tringlerie de volets selon l'une des revendications 1 à 3, caractérisée en ce que les ressorts (23) sont réalisés sous la forme de paquets de rondelles Belleville.
